(19) **Europäisches Patentamt**

**European Patent Office**

**Office européen des brevets**

(11) Veröffentlichungsnummer: **0 349 663**

**A1**

# (12) EUROPÄISCHE PATENTANMELDUNG

(21) Anmeldenummer: **88110762.7**

(22) Anmeldetag: **06.07.88**

(51) Int. Cl.⁴: **F02B 51/04 , F02B 77/02**

(43) Veröffentlichungstag der Anmeldung:
**10.01.90 Patentblatt 90/02**

(84) Benannte Vertragsstaaten:
**ES GR**

(71) Anmelder: **Stüer, Willy**
**Christoph-Siebe-Strasse 4**
**D-4840 Rheda-Wiedenbrück(DE)**

(72) Erfinder: **Stüer, Willy**
**Christoph-Siebe-Strasse 4**
**D-4840 Rheda-Wiedenbrück(DE)**

(74) Vertreter: **Schumacher, Horst, Dr. Dipl.-Phys.**
**Frühlingstrasse 43 (Ecke Holunderweg)**
**D-4300 Essen 1(DE)**

(54) **Verfahren und Vorrichtung zur Verbesserung des Verbrennungsprozesses von Brennstoffen mit Sauerstoff enthaltenden Gasen sowie Verfahren zum Herstellen einer solchen Vorrichtung.**

(57) Bei einem Verfahren und einer Vorrichtung zur Verbesserung des Verbrennungsprozesses von Brennstoffen mit Sauerstoff enthaltenden Gasen sowie einem Verfahren zum Herstellen einer solchen Vorrichtung wird der Verbrennungsprozeß dadurch gefördert, daß die Reaktionspartner des Verbrennungsprozesses einzeln oder gemeinsam oder daß zumindest einer der Reaktionspartner unmittelbar vor der Verbrennung mit mindestens einer zuvor behandelten Oberfläche in Kontakt gebracht wird. Die Behandlung der Oberfläche erfolgt mit einem erhärtbaren und vor oder während seines Erhärtens elektrisch polarisierbaren Stoff. Dieser Stoff wird auf der Oberfläche vor oder während des Erhärtens niedergeschlagen oder die Oberfläche wird aus diesem Stoff hergestellt oder das ganze Bauteil wird aus diesem Stoff hergestellt. Die Erhärtung dieses Stoffes zu oder auf der Oberfläche oder die Erhärtung des Stoffes zu dem die Oberfläche aufweisenden Bauteil erfolgt im elektrisch polarisierten Zustand des Stoffes. Alternativ kann ein Stoff verwendet werden, der durch Reibung oder dergleichen elektrostatisch aufladbar und, gegebenenfalls, auch elektrisch polarisierbar ist. Durch die Erfindung werden unter anderem Leistungsverbesserungen und/oder Verbrauchsverminderungen bei Kraftfahrzeugmotoren erreicht.

# Verfahren un Vorrichtung zur Verbesserung des Verbrennungsprozesses von Brennstoffen mit Sauerstoff enthaltenden Gasen sowie Verfahren zum Herstellen einer solchen Vorrichtung

Die Erfindung bezieht sich auf ein Verfahren und eine Vorrichtung zur Verbesserung des Verbrennungsprozesses von insbesondere feinteiligen Brennstoffen mit Sauerstoff enthaltenden Gasen (nachfolgend als "Verbrennungsluft" bezeichnet), insbesondere bei der Verbrennung gasförmiger oder flüssiger Brennstoffe, insbesondere in Brennkraftmaschinen von Fahrzeugen sowie ein Verfahren zum Herstellen einer solchen Vorrichtung.

Vor allem auf dem Gebiet der Fahrzeugmotoren werden derzeit große Anstrengungen zur Optimierung des Verbrennungsprozesses unternommen. Ziel dieser Bemühungen ist einerseits die Senkung des Kraftstoffverbrauches und andererseits eine Verringerung der Umwelbelastung, zum Beispiel durch Verwendung von weniger Blei und weniger Benzol. Auch Leistungsverbesserungen sind durchaus erwünscht. Zur Erreichung dieser Ziele gibt es mehrere Lösungswege, die einander zum Teil überlappen. Wege zur Leistungsverbesserung und/oder Verbrauchsverminderung bestehen unter anderem in der Optimierung der Verbrennungsluftzufuhr, insbesondere mit Hilfe von Vier-Ventil-Motoren, Turbo-Ladern und dergleichen. Wege zur Schadstoffverminderung bestehen unter anderem in der Verwendung von Katalysatoranordnungen zum Nachbehandeln der Verbrennungsabgase, Veränderungen der Kraftstoffzusammensetzung oder dergleichen. Ein anderer Weg besteht in der Abmagerung des Luft/Kraftstoff-Gemisches. Darüber hinaus ist auch bereits die Anwendung elektrischer Felder praktiziert worden; allerdings erwies sich die Wirkung solcher Anwendungen auf die Reaktionspartner am Verbrennungsort in praktischen Anwendungsfällen als zu gering.

Der Erfindung liegt die **Aufgabe** zugrunde, ein weiteres Verfahren sowie eine weitere Vorrichtung der eingangs genannten Art und ein Verfahren zum Herstellen einer solchen Vorrichtung bereitzustellen, insbesondere den praktischen Nutzen der Einwirkung elektrischer Felder auf die Reaktionspartner zu verbessern.

Zur **Lösung** dieser Aufgabe wird hinsichtlich eines Behandlungsverfahrens die Vorgehensweise gemäß Anspruch 1 vorgeschlagen, durch welche der Verbrennungsprozeß intensiviert wird, indem er vollständiger und/oder schneller abläuft, was - behandlungsbedingt - durch eine Erhöhung der Reaktionsfähigkeit zumindest eines Reaktionspartners und/oder eine verbesserte Homogenität der Mischung der Reaktionspartner und/oder des Reaktionsablaufes erreicht wird. Hierdurch können insbesondere bei der erfindungsgemäß bevorzugten Anwendung an Brennkraftmaschinen von Fahrzeugen die Schadstoffe im Abgas und/oder der Brennstoffverbrauch vermindert und/oder die Motorenleistung, insbesondere im Teillastbereich, verbessert werden. - Hinsichtlich der Vorrichtung wird die Aufgabe durch die Merkmale des Anspruches 7 gelöst, wobei die vorgenannten Vorteile sinngemäß erreicht werden. Schließlich wird die Aufgabe hinsichtlich eines Herstellungsverfahrens für die Vorrichtung durch die Merkmale des Anspruchs 9 gelöst.

Im Sinne der Erfindung sind unter "Brennstoffen" alle, insbesondere feinteiligen Brennstoffe, also auch feinteilige feste Brennstoffe zu verstehen - vorzugsweise aber flüssige und gasförmige Brennstoffe. Die Erfindung ist mithin grundsätzlich in allen Bereichen der Berbrennungstechnik, insbesondere fossiler, aber auch künstlich hergestellter Brennstoffe anwendbar, also auch zum Beispiel im Bereich von Kraftwerksfeuerungen und dergleichen. Besonders bevorzugtes Anwendungsgebiet sind Brennkraftmaschinen für den mobilen oder stationären Einsatz, insbesondere aber von Fahrzeugmotoren jeder Art von Wasser-, Land- und Luftfahrzeugen, also auch Düsen- oder Raketenantrieben.

Erfindungsgemäß können sowohl die Reaktionspartner gemeinsam, das heißt vor, während und/oder nach deren Mischung behandelt werden. Vorzugsweise werden die Reaktionspartner bzw. Gruppen von Reaktionspartnern getrennt und in der Regel auch unterschiedlich, vorzugsweise mit entgegengesetzter eletrischer Polarität behandelt. Besonders bevorzugt wird der Brennstoff, der seinerseits ein Gemisch mehrerer Stoffe, insbesondere mehrerer Brennstoffe sein kann, getrennt von der Verbrennungsluft, bei der es sich auch um ein Gasgemisch handeln kann, behandelt. Grundsätzlich reicht es aber bereits aus, lediglich einen der Reaktionspartner, insbesondere eine Gruppe von Reaktionspartnern wie das Brennstoffgemisch einerseits oder die Verbrennungsluft andererseits erfindungsgemäß zu behandeln.

Als "Oberfläche", mit der der zumindest eine Reaktionspartner erfindungsgemäß in Kontakt gebracht wird kommen grundsätzlich alle Oberflächenbereiche der Verbrennungsanlage in Betracht, die von dem mindestens einen Reaktionspartner unmittelbar vor der Verbrennung passiert werden und zwar grundsätzlich auch die Oberfläche von Vorratsbehältern des mindestens einen Reaktionspartners. Vorzugsweise handelt es sich bei diesen Oberflächen um die Wandungen der von dem zumindest einen Reaktionspartner zu passierenden Transportwege in den Verbrennungsraum. Grundsätzlich kann der Verbrennungsraum davon mit umfaßt sein. Grenzen werden lediglich dadurch gesetzt, daß die erfindungsgemäß hergestellte oder behandelte Oberfläche durch äußere Einwirkung, wie etwa zu hohe Temperaturen oder dergleichen nicht geschädigt wird, das heißt, daß die Wirkungen der Oberfläche auf den mindestens einen Reaktionspartner auch erhalten bleiben und nicht oder nur möglichst selten nachgebessert werden müssen. Ein "In-Kontakt-Bringen" des mindestens einen Reaktionspartners mit der erfindungsgemäßen Oberfläche beinhaltet demnach, daß die einzelnen Moleküle oder zumindest ein Teil der Moleküle des mindestens einen Reaktionspartners mit der Oberfläche entweder in Berührungskontakt gelangen oder in nicht zu großem Abstand an der Oberfläche vorbeigeführt werden, weil mit zunehmendem Abstand von der erfindungsgemäßen Oberfläche die Wirkung auf den Reaktionspartner nachläßt. Es hat sich zum Beispiel bei der Anwendung an einem Einspritzmotor für eine Fahrzeugmaschine als völlig ausreichend erwiesen, wenn die Oberflächen oder Teile der Oberflächen in den Transportkanälen für den zumindest einen Reaktionspartner, die in den Verbrennungsraum führen, erfolgt, wie zum Beispiel die Herstellung erfindungsgemäßer Oberflächen im Bereich der Verbrennungsluftwege.

Bei dem erfindungsgemäß zu verwendenden "Stoff", mit dem die erfindungsgemäße Oberfläche behandelt wird, oder aus der diese Oberfläche bzw. das ganze diese Oberfläche tragende Bauteil hergestellt wird, handelt es sich um einen solchen Stoff, der zunächst in feinteiliger wie pulverisierter, gasförmiger und insbesondere flüssiger Form vorliegt und der sich unter Bildung eines mehr oder weniger elastischen oder auch eines relativ harten Materialstücks erhärten kann, zum Beispiel durch Abkühlung oder durch chemische Reaktion. Ein solcher Stoff muß erfindungsgemäß elektrisch polarisierbar und/oder durchu Reibung oder dergleichen elektrostatisch aufladbar sein. Elektrisch polarisierbar im Sinne der Erfindung heißt, daß zum Beispiel eine Ladungsverschiebung oder Ladungsorientierung in den Atomen, Molekülen oder Molekülgruppen des Stoffes möglich ist, was auch eine Orientierung ganzer Moleküle, insbesondere in einem elektrischen Gleichspannungsfeld beinhaltet. Als derartige Stoffe kommen insbesondere die im Patentanspruch 5 aufgeführten Stoffe bzw. Gruppe von Stoffen in Frage.

Erfindungsgemäß muß entweder dafür Sorge getragen werden, daß während der Erhärtung des erfindungsgemäßen Stoffes dieser bzw. seine entsprechend geeigneten Komponenten im elektrisch polari sierten Zustand verbleibt/verbleiben bzw. zumindest unmittelbar vor seinem Erhärten elektrisch polarisiert worden ist/sind. Hierzu kann es ausreichen, den Stoffe im noch nicht erhärteten Zustand elektrisch zu polarisieren und zwar entweder bevor er auf die erfindungsgemäße Oberfläche aufgetragen ist, und/oder während bzw. nachdem er auf die erfindugsgemäße Oberfläche aufgetragen worden ist bzw. diese Oberfläche aus diesem Stoff durch Herstellen des Bauteils erzeugt worden ist. Danach kann der Stoffe während des Erhärtens grundsätzlich sich selber überlassen bleiben. In der Regel ist es aber erforderlich, durch geeignete Maßnahmen auch während der Erhärtung den elektrischen Polarisationszustand des Stoffes aufrechtzuerhalten. In allen Fällen ist für die Herstellung und Aufrechterhaltung des elektrisch polarisierten Zustandes des erfindungsgemäßen Stoffes vor und während dessen Erhärten die Anwendung eines elektrischen Gleichspannungsfeldes besonders geeignet. Ein solches Gleichspannungsfeld kann auf im Grunde beliebige Weise erzeugt und angewendet werden, zum Beispiel kann das Oberflächen zu behandelnde Bauteil elektrisch positiv oder elektrisch negativ aufgeladen und, insbesondere, dieser Aufladungszustand bis zum Erhärten des Stoffes aufrechterhalten werden. Grundsätzlich ist es aber ausreichend, wenn das elektrische Gelichspannungsfeld so ausgebildet ist, daß der zu erhärtende Stoff während der Erhärtung elektrisch polarisiert wird und bleibt. Elektrische Gleichspannungsfelder von wenigen, zum Beispiel 1 bis 10 kV können bereits ausreichen, doch können auch elektrische Felder von mehreren 100 kV im einzelnen Anwendungsfall sinnvoll sein. - Alternativ zu diesem Weg kann erfindungsgemäß auf das Polarisieren und/oder das Aufrechterhalten des polarisierten Zustandes des Stoffes dann verzichtet werden, wenn der erhärtete Stoffe durch Reibung, wie zum Beispiel vorzugsweise durch den vorbeiströmenden Verbrennungsluftstrom oder dergleichen elektrisch aufladbar ist. Auch in diesem Fall sollte ein elektrisches Gleichspannungsfeld während der Erhärtung oder aber zumindest unmittelbar vor dem Erhärten des Stoffes auf diesen wirken.

Die Schichtdicke des Stoffes auf der Oberfläche kann relativ dünn sein, insbesondere eine Stärke von 0,01 bis 100 μm aufweisen, wobei die Schichtdicke weder konstant sein muß, noch die Oberfläche ununterbrochen beschichtet sein muß. Die Anforderungen an die Dicke, Gleichmäßigkeit und Vollständigkeit des Stoffauftrages auf die Oberfläche hängen von den Umständen des einzelnen Prozesses ab. In der Regel werden die Anforderungen um so geringer sein, je intensiver der Kontakt zwischen der Oberfläche und dem mindestens einen Reaktionspartner sein kann.

Besonders intensive Berührungen treten zum Beispiel in Luftfiltern, an Ventilen und/oder Einspritzdüsen und ähnlichen austauschreichen Kontaktflächen stromauf oder unmittelbar am oder im Verbrennungsraum, insbesondere von Brennkraftmaschinen auf.

In jedem Falle ist es von Vorteil, wenn die Behandlungsstelle des mindestens einen Reaktionspartners, das heißt, die erfindungsgemäße Oberfläche möglichst nahe dem Verbrennungsraum gelegen ist, das heißt, daß die bis zum Verbrennungsraum noch zurückzulegenden Wege möglichst kurz sind und/oder die dafür benötigte Zeitdauer möglichst kurz ist und/oder daß auf diesem Wege zum Beispiel elektrisch nicht leitende Wandungen vorgesehen sind.

Zweckmäßige Ausgestaltungen des Erfindungsgegenstandes, die insbesondere eine sehr schnelle und vollständige, insbesondere spontane Verbrennung gewährleisten, sind in weiteren Ansprüchen enthalten.

Die vorgenannten, erfindugsgemäß zu verwendenden Bauteile bzw. Verfahrensschritte unterliegen in ihrer Größe, Formgestaltung, Materialauswahl und technischen Konzeption bzw. den Verfahrensbedingungen keinen besonderen Ausnahmebedingungen, so daß die in dem jeweiligen Anwendungsgebiet bekannten Auswahlkriterien uneingeschränkt Anwendung finden können.

Ausführungsbeispiele:

Bei einer Brennkraftmaschine für Fahrzeuge mit Kraftstoffeinspritzung wurde der Luftansaugweg, insbesondere der Verbrennungsluftfilter bei laufender Maschine in folgender Weise behandelt: Ein (Poly)dimethylsiloxan als schnell vulkanisierende Einkomponenten-Lösung, die mit einem Lösungsmittel aus Trichloräthylen verdünnt war, wurde über eine mit 28 kV elektrisch positiv aufgeladene Kupferplatte einer Größe von 0,2 x 0,3 m in etwa tangentialer Richtung mit Druckluft als Treibgas derart gesprüht, daß es nach Passieren der Kupferplatte in den Luftansaugweg der Brennkraftmaschine gelangte. Aufgrund des sehr schnellen Erhärtens des im elektrischen Feld versprühten Stoffes konnte die Brennkraftmaschine unmittelbar danach gestartet werden. Die durch die erfindungsgemäße Maßnahme erzielte Kraftstoffersparnis betrug mehr als 20 %. Außerdem wurden Beschleunigungsverbesserungen im Teillasbereich erzielt. Ergänzende Versuche deuten darauf hin, daß die ergänzende Behandlung der den Kraftstoff führenden Leitungswege mit dem gleichen Polydimethylsiloxan zu weiterer Kraftstoffersparnis führen. Die ergänzenden Versuche wurden mit der gleichen Versuchsanordnung und den gleichen Versuchsbedingungen durchgeführt, wobei die Kupferplatte allerdings elektrisch negativ aufgeladen wurde. Überraschenderweise wurde sogar dann eine Kraftstofferparnis festgestellt, wenn der Kraftstoff keinen unmittelbaren Kontakt mit der erfindungsgemäß behandelten Oberfläche, sondern nur einen mittelbaren Kontakt hatte, in dem die äußere Oberfläche der Kraftstoff führenden Leitungen behandelt wurde. Der Kontakt mit der erfindgungsgemäß behandelten Oberfläche und einem Reaktionspartner muß also nicht zwingender Weise unmittelbar sein, sondern es reicht aus, wenn der Abstand zwischen der erfindungsgemäß behandelten Oberfläche und den vorbeistreichenden Reaktionspartner relativ gering, etwa in der Größenordnung von wenigen Millimetern, ist. Natürlich ist die Wirkung um so besser, je geringer die Abstände zu der Oberfläche sind und je unmittelbarer und intensiver der Kontakt ist.

Der gleiche Versuch wurde mit einem anderen, von Hause aus elektrisch gut isolierenden Stoff wiederholt. Bei dem Stoff handelte es sich um eine Mischung aus 2% Vol - % Dimethylsiloxan und 98% Vol. - % Parafinen, welche Mischung vor dem Erhärten in in Tetra—chlorkohlenstoff gelöster Form mit 89,7% Vol. - % Feststoffanteil vorlag. Die damit erzielten Erfolge waren ähnlich gut wie im erstgenannten Versuch.

## Ansprüche

1. Verfahren zur Verbesserung des Verbrennungsprozesses von Brennstoffen mit Sauerstoff enthaltenden Gasen,
**dadurch gekennzeichnet, daß**
die Reaktionspartner einzeln oder gemeinsam oder das zumindest einer der Reaktionspartner unmittelbar vor der Verbrennung mit mindestens einer Oberfläche in Kontakt gebracht wird/werden, welche mindestens eine Oberfläche zumindest teilweise einen erhärteten Stoff (Material) trägt oder aus einem erhärteten Stoff (material) besteht, welcher Stoff vor oder während seines Erhärtens elektrisch polarisierbar ist und dessen Erhärtung auf der oder zu der Oberfläche oder dessen gemeinsame Erhärtung mit dem die Oberfläche aufweisenden Bauteil im elektrisch polarisierten Zustand des Stoffes oder zumindest unmittelbar nach einer elektrischen Polarisationsbehandlung stattgefunden hat, oder welcher Stoff zumindest nach seinem Erhärten durch Reibung oder dergleichen elektrostatisch aufladbar ist oder welcher Stoff elektrisch polarisierbar und elektrostatisch aufladbar ist und im polarisierten Zustand erhärtet oder zumindest unmittelbar vor seinem Erhärten elektrisch polarisiert worden ist.

2. Verfahren nach Anspruch 1, dadurch gekennzeichnet, daß eine elektrische Behandlung des Stoffes, insbesondere die elektrische Polarisation des Stoffes, in einem elektrischen Gleichspannungsfeld zumindest unmittelbar vor dem Erhärten des Stoffes erfolgt ist.

3. Verfahren nach Anspruch 1 oder 2, dadurch gekennzeichnet, daß die elektrische Behandlung des Stoffes, insbesondere die elektrische Polarisation, während des Erhärtens des Stoffes durch ein elektrisches Gleichspannungsfeld aufrechterhalten worden ist.

4. Verfahren nach Anspruch 2 oder 3, dadurch gekennzeichnet, daß die Gleichspannung mindestens 1 kV beträgt.

5. Verfahren nach einem der Ansprüche 1 bis 4, dadurch gekennzeichnet, daß der Stoff aus einem polymeren Kunststoff, insbesondere Polyorganosiloxan, PTFE, Polyester, Polypropylen, kondensiertem Silikonharz und/oder Polymethylsiloxan, insbesondere Polydimethylsiloxan und/oder aus Parafinen und/oder Mischungen dieser komponenten besteht.

6. Verfahren nach einem der Ansprüche 1 bis 5, dadurch gekennzeichnet, daß die Reaktionspartner jeweils mit einer anderen Oberfläche in Kontakt gebracht werden, von denen der Stoff der einen Oberfläche entgegengesetzt zum Stoff der anderen Oberfläche polarisiert erhärtet ist.

7. Vorrichtung zur Verbesserung des Verbrennungsprozesses von Brennstoffen mit Sauerstoff enthaltenden Gasen,

**dadurch gekennzeichnet, daß**

sie zumindest eine Oberfläche aufweist, die mit den Reaktionspartnern oder zumindest einem der Reaktionspartner unmittelbar vor der Verbrennung in Kontakt kommt/kommen, welche zumindest eine Oberfläche zumindest teilweise einen erhärteten Stoff (Material) trägt oder aus einem erhärteten Stoff (Material) besteht, welcher Stoff vor oder während seines Erhärtens elektrisch polarisierbar ist und dessen Erhärtung auf der oder zu der Oberfläche oder dessen gemeinsame Erhärtung mit dem die Oberfläche aufweisenden Bauteil im elektrisch polarisierten Zustand des Stoffes oder zumindest unmittelbar nach einer elektrischen Polarisationsbehandlung stattgefunden hat, oder welcher Stoff zumindest nach seinem Erhärten durch Reibung oder dergleichen elektrostatisch aufladbar ist oder welcher Stoff elektrisch polarisierbar und elektrostatisch aufladbar ist und im polarisierten Zustand erhärtet oder zumindest unmittelbar vor seinem Erhärten elektrisch polarisiert worden ist.

8. Vorrichtung nach Anspruch 7, dadurch gekennzeichnet, daß die zumindest eine Oberfläche nach einem Verfahren nach einem der Ansprüche 2 bis 6 hergestellt ist.

9. Verfahren zur Herstellen einer Vorrichtung nach Anspruch 7 oder 8,

**dadurch gekennzeichent, daß**

auf die zumindest eine Oberfläche zumindest teilweise ein erhärtbarer Stoff (Material) aufgetragen oder daß die Oberfläche aus einem erhärtbaren Stoff (Material) gebildet wird oder daß das ganze Bauteil aus einem erhärtbaren Stoff (Material) hergestellt wird, welcher Stoff vor oder während seines Erhärtens elektrisch polarisierbar ist, wobei die Erhärtung des Stoffes auf der oder zu der Oberfläche oder die Erhärtung des Bauteiles oder die gemeinsame Erhärtung des Bauteiles mit dem erhärtbaren Stoff im elektrische polarisierten Zustand des Stoffes oder zumindest unmittelbar nach einer elektrischen Polarisationsbehandlung stattfindet, oder welcher Stoff zumindest nach seinem Erhärten durch Reibung oder dergleichen elektrostatisch aufladbar ist oder welcher Stoff elektrisch polarisierbar und elektrostatisch aufladbar ist und im polarisierten Zustand erhärtet oder zumindest unmittelbar vor seinem Erhärten elektrisch polarisiert wird.

10. Verfahren nach Anspruch 9, dadurch gekennzeichnet, daß die Verfahrensschritte nach einem der Ansprüche 2 bis 6 durchgeführt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 10, Nr. 134 (M-479)[2191], 17. Mai 1986; & JP-A-60 259 719 (NISSAN JIDOSHA K.K.) 21-12-1985 --- | 1,2,6-8 | F 02 B 51/04 F 02 B 77/02 |
| A | PATENT ABSTRACTS OF JAPAN, Band 10, Nr. 77 (M-464)[2134], 26. März 1986; & JP-A-60 219 412 (NISSAN JIDOSHA K.K.) 02-11-1985 --- | 1,2,7,8 | |
| A | GB-A-2 092 668 (CAVANI) * Seite 2, Zeilen 26-80 * --- | 1,6-8 | |
| A | GB-A-1 152 957 (CREBER) * Seite 1, Zeilen 1-81 * --- | 1,5,8 | |
| A | FR-A-2 028 887 (DOW CHEMICAL) * Seite 3, Zeile 2 - Seite 4, Zeile 34 * ----- | 1,7,8 | |

RECHERCHIERTE SACHGEBIETE (Int. Cl.4)

F 02 B

Der vorliegende Recherchenbericht wurde für alle Patentansprüche erstellt

| Recherchenort | Abschlußdatum der Recherche | Prüfer |
|---|---|---|
| DEN HAAG | 15-09-1988 | WASSENAAR G. |